# EUROPEAN PATENT APPLICATION

(11) **EP 0 525 849 A1**
(43) Date of publication of application: **03.02.1993**
(21) Application number: 92201916.1
(22) Date of filing: 26.06.1992
(51) Int. Cl.: B65D 85/52, B65D 25/10

(54) **Container blank**

(30) Priority: 26.06.1991 NL 9101110
(71) Applicant: LEOPACK B.V., NL-8800 AA Franeker (NL)
(72) Inventor: Steen, Marcel Gerard Daniel, NL-1161 BM Zwanenburg (NL)
(74) Representative: de Bruijn, Leendert C.

(57) **Abstract**

Method for forming a container blank from pulp material using a mould, said blank comprising walls and a bottom. The object is for the end container product to have relatively straight walls. Since in the moulding of paper pulp a certain tapering of the walls during their moulding is necessary to maintain clearance of the mould, provision is made according to the invention for a container blank with relatively inward slanting walls and with an in some way curved bottom to be made first, following which the curve is removed from the bottom when the walls are moved apart, so that a container with straight walls is produced.

## Description

The present invention relates to a method according to the preamble of claim 1.

From US-A-2,345,274 an egg carton is known being provided with curved top and bottom surface. This curved surface can flex inwardly and outwardly to engage different sized eggs. In this way it is guaranteed that an egg contained in the package is always engaged without clearance such that damage due to shock is avoided as much as possible. The curved bottom and top surface are connected to the side walls. In deforming such an end surface the side wall will also deform locally but the kind of such a deformation is substantially determined by the shape of the side wall of the object to be packaged (the egg). Although such an embodiment might be satisfactory for packaging of eggs deformation of the top and bottom is relatively limited.

The method as described in the preamble of claim 1 is generally known in the art and is used, for example, for making egg trays from pulp material. It has also been proposed that packs should be made in this way for other products. Containers made from such pulp material have the advantage that they are recycled together with other paper material. Recycling chains currently exist everywhere for returning paper material, in contrast to the use of plastic materials. Plastic materials have to be returned separately for optimum recycling. Such chains do not exist yet, or they are very expensive, owing to the low volume.

It is therefore desirable to use containers made from paper pulp material for packing all kinds of products.

However, in the prior art the problem has been found that the method of forming such containers with a mould imposes the restriction that the walls of such a container have to run relatively slanting in order to maintain clearance of the mould. Compared with the processing of plastic material, a relatively large clearance angle is necessary. This imposes all kinds of restrictions on the containers, and there is a desire in the art to provide a container which does not have such disadvantages.

According to the invention these advantages are removed with the method as described above having the characterizing features of claim 1.

Through the provision of openings in the area between the side walls and the bottom (or top) of the container a substantial deformation of the bottom is possible resulting in a substantial displacement of the side walls without any need of support from objects such as in the above prior art. This means that the side walls can move over a relatively large angle which is desirable in view of the above requirement relating to the clearance angle. The product obtained by the method as described above can be positioned in a stable condition and will not resiliently move back as in the prior art package.

The invention is based on the idea of first producing a container blank with the usual tapering walls, but with a somehow corrugated or curved bottom surface area. If the bottom part is then flattened off, i.e. the undulating curves and the like are removed, the surface area thereof will be increased in projection, and the bottom ends of the walls will be pressed apart, with the result that a container with less tapering or straight, or even outward running, walls is produced. This displacement can be slightly resilient, so that the products placed in the container can be wedged.

In order to produce such a deformation of the bottom in a controlled manner, according to a preferred embodiment of the invention, said bottom is provided with weakening lines. The walls can also be provided with weakening lines.

According to an advantageous embodiment of the invention, the bottom is curved inwards. In the case of such an embodiment it is only necessary to press the product to be packed into the container and, through the pressing in of this product, the bottom will be automatically placed in a position which moves the side walls outwards.

The bottom can be any curved shape, but according to a preferred embodiment the centre part of the bottom of the container is made flat. Going out from the centre, the forces are uniformly distributed over the connecting parts of the bottom, as a result of which the side walls move away uniformly during the insertion of, for example, a product.

According to a further advantageous embodiment, a curve is made near the boundary between the walls and the bottom. Weakening lines are preferably made in the curve, as a result of which the at least partial removal of the curve is facilitated.

The invention also relates to a container unit, comprising a plurality of container blanks according to one of the preceding claims. Such a container unit can be used for packing a large series of products, for example compost blocks with plant cuttings, which are used in nurseries.

The invention will be explained below with reference to examples of embodiments shown in the drawings, in which:
Fig. 1 shows a cross-section of a container blank according to the invention;
Fig. 2 shows the container blank according to Fig. 1 after the insertion of a product;
Fig. 3 shows the container according to Fig. 2 in perspective view; and
Fig. 4 shows a container unit according to the invention partly with containers, and partly with container blanks.

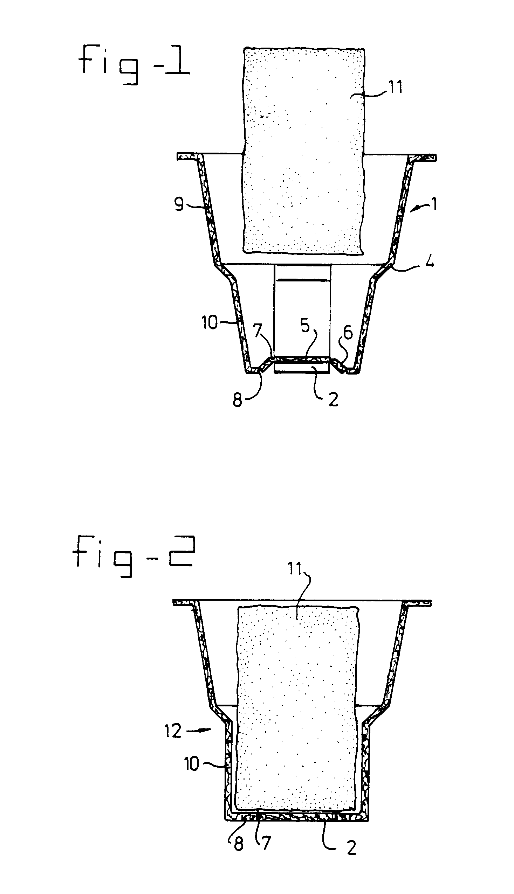

The container blank according to the invention is indicated in its entirety by 1 in Fig. 1. This blank is formed from some kind of pulp material, such as that used for making egg trays. All kinds of substances can be added to this material, in order to influence its properties, such as the service life. The container 1 comprises a bottom part 2 and side walls 4. Bottom part 2 comprises a flat part 5 and curved parts 6. Weakening lines 7 and 8 are present. Wall 4 comprises upper wall part 9 and lower wall part 10. It can be seen clearly from Fig. 1 that these wall parts taper. This is necessary to ensure that clearance of the inner mould on which the container blank is produced. It is, however, often undesirable for the packing of products that the lower wall part 10 in particular should be slanting inwards. An example for the packing of products other than eggs is the packing of compost blocks, as indicated by 11 in Fig. 1. Such compost blocks contain seedlings, and the object is to grow such seedlings to such a size that they can be placed in a pot.

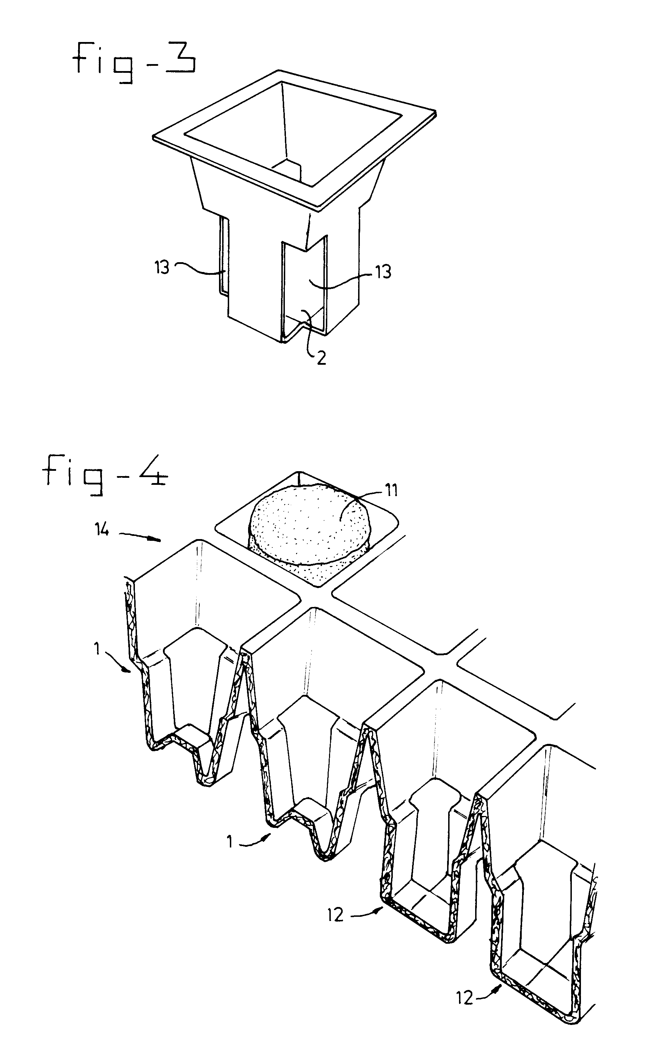

When compost block 11 is placed in the container blank 1 according to the invention, the situation shown in Fig. 2 occurs. The container blank which has now become container 12 is deformed at its lower part. The bottom part 2 has now become flat and the lower wall parts 10 have moved outwards. All this is achieved through pivoting about the weakening lines 7 and 8. The restoring moment of the lower walls 10 causes compost block 11 to be wedged securely in container 12.

Fig. 3 shows the container according to the invention without the compost block placed in it, but with deformed bottom part 2. It can be seen that openings 13 are also present. Such openings not only facilitate the deformation of the bottom part 2, but in the present case can also be used for pressing the compost block upwards from the bottom. Such openings can also fulfil a useful function in nurseries with the so-called flood irrigation system, in which water can reach the compost block through the openings 13.

A container unit indicated by 14 is shown in Fig. 4. A series of compost blocks 11 can be packed in it. For the sake of clarity, a number of container blanks 1 and a number of containers 12 are shown.

Although the invention is illustrated above with reference to the example of packing of compost blocks, it must be understood that all kinds of products can be packed. In the case of other types of products other requirements are set, so that the container blank and the container thereby obtained can be designed differently. For example, it is possible for the lower bottom parts after deformation by the inserted product to be not absolutely straight or to taper slightly, but they can even widen out slightly. This means that a product can be packed in a particularly reliable way. An example is flat products such as crisps. It is also possible to make the bottom so that it is not continuous, but is provided with an opening lying in the centre. It is of course also possible that a top part of a container is provided flexible in the way as described above. All these variants are considered to lie within the scope of anyone skilled in the prior art, after reading the above and the appended claims.

## Claims

1. Method for forming a container blank from pulp material using a mould, said blank comprising walls and a bottom, in which the walls are formed at such an angle that clearance of the mould is possible, wherein the bottom is formed with a surface area which is substantially greater than the surface area of a corresponding flat bottom connecting the walls of the container and which is displaceable between two end positions with a different surface area, characterized in that in the wall area adjacent to the bottom openings are formed.

2. Container blank obtained by the method according to Claim 1, in which the bottom is provided with weakening lines.

3. Container blank according to Claim 2, in which the walls are provided with weakening lines.

4. Container blank according to Claim 3, in which the container is angular and the openings are provided near the corner points.

5. Container blank according to one of Claims 2 - 4, in which the bottom is curved inwards.

6. Container blank according to one of Claims 2 - 5, in which the centre part of the bottom of the container is flat.

7. Container blank according to Claims 2 - 6, in which a curve is provided near the boundary between the walls and bottom.

8. Container blank according to Claim 7, in which a weakening line is made in the curve.

9. Container unit, comprising a plurality of container blanks according to one of the preceding claims.

10. Method for producing a container from a container blank, comprising deformation of the bottom to a surface area which is substantially larger in projection.

11. Container made from the container blank according to one of Claims 2 - 8, in which the bottom has a substantially smaller surface area than the surface area of the bottom of the container blank.

12. Container according to Claim 11, in which the bottom is substantially flat.
